# EUROPEAN PATENT APPLICATION

(11) **EP 1 954 045 A1**
(43) Date of publication of application: **06.08.2008**
(21) Application number: 07250391.5
(22) Date of filing: 30.01.2007
(51) Int. Cl.: H04N 7/16, H04N 7/173, H04N 5/445

(54) **Method and system for providing video content**

(71) Applicant: BRITISH TELECOMMUNICATIONS public limited company, London EC1A 7AJ (GB)
(72) Inventor: The designation of the inventor has not yet been filed
(74) Representative: Sayer, Robert David

(57) **Abstract**

A method and system for providing content for a video-on-demand (VOD) service to one or more users, wherein the or each user has a client device 5 for decoding the video content for output to a display device. Part or all of a video data set, corresponding to a video programme, is pre-emptively sent to a selected one or more client devices in advance of a predetermined playtime associated with said video programme. Selection of the or each client device is performed by identifying, on the basis of a user profile associated with each user of the service, one or more users likely to request a download of said video programme at a future time. Decoding data is sent to the or each selected client device, the decoding data being arranged to enable decoding of said part or all of the video data set no earlier than the predetermined playtime.

## Description

The present invention relates to a method and system for providing video content, and particularly content for a video-on-demand (VOD) service where the content has an associated playtime representing the earliest time at which the content can be decoded at a user's client terminal.

Many providers of video content, whether satellite, cable or internet protocol (IPTV) providers, offer some form of VOD service enabling their customers to select content they wish to view at a time of their choosing. A menu of VOD events is usually presented as part of the provider's electronic programme guide (EPG) thereby allowing the user to browse available events and thereafter select an event using their remote control.

Some types of VOD event have an associated playtime, that is the earliest time at which the service provider allows the event data to be decoded at a user's terminal. This is often the case with sporting or music events where there is some policy or agreement in place as to who can show an event and when. For example, a first company may own the rights to record UK football matches played at 3pm on a Saturday, but has an agreement in place with a second company allowing them to show the football matches only after 10pm on the same day. Therefore, the second company can offer one or more matches as VOD events for viewing after 10pm. A disadvantage exists in that there will often be a relatively large number of subscribers requesting the VOD event at or around the playtime, particularly if the event is popular or much anticipated. This will place a huge demand on the network required to carry the video data between the provider's server and subscriber terminals. In reality, there may be a significant delay between the time the user requests the event and when there is sufficient data in the user's buffer to commence showing the event. This is highly undesirable in any commercial video system.

According to a first aspect of the invention, there is provided a method of providing content for a video-on-demand (VOD) service to one or more users, the or each user having a client device for decoding the content for output to a display device, wherein the method comprises: pre-emptively sending part or all of a video data set, corresponding to a video programme, to a storage means associated with one or more selected client devices, said sending step being performed in advance of a predetermined playtime associated with the video programme, selection of the or each client device being performed by identifying, on the basis of a user profile associated with users of the service, one or more users likely to request a download of said video programme at a future time; and sending decoding data to the or each storage means, the decoding data being arranged to enable decoding of said part or all of the video data set no earlier than the predetermined playtime. The playtime represents the earliest time at which the content can be decoded at a user's client terminal

By pre-emptively sending video data to storage means associated with client devices on the basis of who is likely to request that data at a later time, the data is made available at said client device so that it can be decoded if and when the associated users request the data. The storage means can be integral with the client device, for example an internal hard drive. Alternatively, the storage means can be remote from the client device and perhaps be associated with a plurality of client devices.

According to a second aspect of the invention, there is provided a method of providing content for a video-on-demand (VOD) service to one or more users, the or each user having a client device for decoding the video content for output to a display device, wherein the method comprises pre-emptively sending part or all of a video data set, corresponding to a video programme, to a selected one or more client devices in advance of a predetermined playtime associated with said video programme, selection of the or each client device being performed by identifying, on the basis of a user profile associated with each user of the service, one or more users likely to request a download of said video programme at a future time, and sending decoding data to the or each selected client device, the decoding data being arranged to enable decoding of said part or all of the video data set no earlier than the predetermined playtime.

ln the case where a multitude of users request a common VOD event, the previously-encountered network burden will be reduced since those considered most likely to request the event will already have the data, or at least part of it, stored on their client device. The process preferably happens seamlessly in the background with users being unaware that pre-emptive transfer and storage is taking place.

The method may be performed at a video server located remotely from the or each client device and further comprises monitoring data throughput between the server and a selected client device, and pre-emptively sending part or all of the video data set to that client device only when the monitored data throughput is at or above a predetermined level. In this way, significant disruption of other services using the network can be avoided since the video data is pre-emptively sent only when the available data throughput is at suitable level.

The user profile may store data representing a user's viewing history, selection being performed by identifying a correspondence between one or more attributes of the video programme and previously-viewed video programmes indicated in the user's viewing history. The attributes may include one or more of programme title, programme genre and playtime.

The user profile may include other data, such as the user's calendar, which may indicate the user's whereabouts and therefore improve the likelihood determination. If a user's calendar indicates the user to be out of the country for a time period, it can be assumed that the user will not request that event and so no pre-emptive transfer will take place. Of course, in practice, the user may request the event when they return but, at this time, pre-emptive transfer should not be required since demand for the event will have depleted.

The decoding data can be sent to the or each selected client device in advance of the predetermined playtime. In this case, the decoding data is made available at the client device but cannot be activated, i.e. to decode or decrypt its corresponding video data set, until playtime. This activation process may rely on the internal clock of the client device. Alternatively, the decoding data can be sent at the playtime, i.e. in a timed-release. The decoding data will be significantly smaller in terms of file size that its corresponding video data set and so sending it around the playtime should not significantly delay decoding.

The method may further comprise automatically deleting the video data set from a client device in the event that no user request is received within a predetermined time period following the playtime. Clearly, if a user does not request the event, the content provider will not want content that has not been paid for stored on a client device. Also, a user will not want content they have not requested taking up valuable memory.

According to a second aspect of the invention, there is provided apparatus providing a video-on-demand (VOD) service to one or more users having respective client devices for decoding the video content for output to a display device, wherein the apparatus comprises: transmission means for sending part or all of a video data set, corresponding to a video programme, to a selected one or more client devices in advance of a predetermined playtime associated with said video programme; selection means arranged to select the or each client device by identifying, on the basis of a user profile associated with each user of the service, one or more users likely to request a download of said video programme; and means for sending decoding data to the or each selected client device, the decoding data enabling decoding of said part or all of the video data set substantially at, or subsequent to, the predetermined playtime.

The invention will now be described, by way of example, with reference to the accompanying drawings in which:
Figure 1 is a schematic diagram of an IPTV network comprising a content service provider and a plurality of user terminals;
Figure 2 shows an example user profile that is used in a selection process for identifying users likely to request a particular VOD event;
Figure 3 is a flow chart indicating the main steps in a method of providing a VOD service according to the invention;
Figures 4a and 4b are timelines indicating the order of events in two alternative VOD provision methods according to the invention; and
Figure 5 is a schematic diagram of an IPTV network in which content data is pre-emptively transferred to local network storage means associated with one or more selected user terminals.

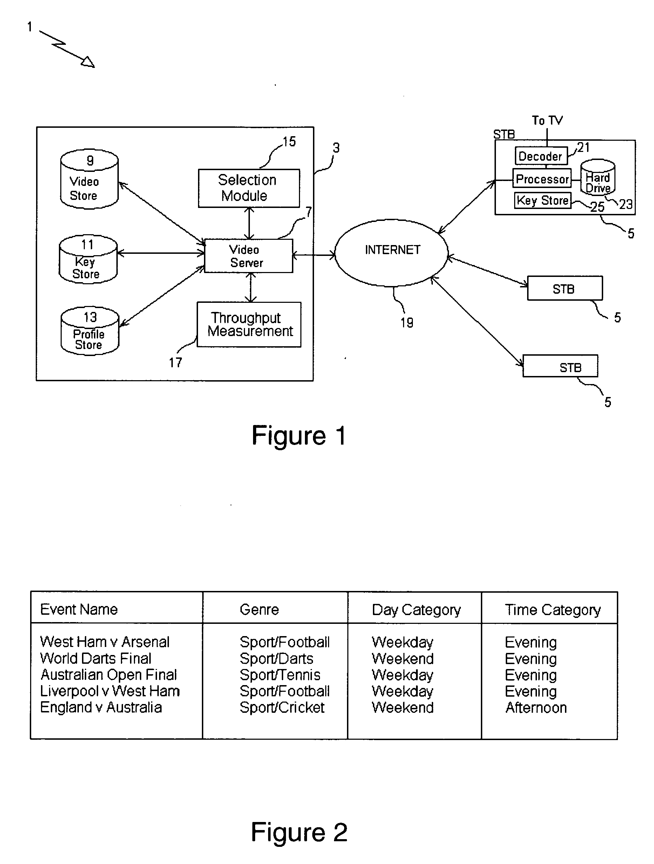

Referring to Figure 1, an IPTV network 1 comprises a content service provider system 3 connectable to a plurality of user terminals 5 by means of an IP network 19, e.g. the Internet. The content service provider system 3 is responsible for gathering multimedia assets, e.g. live television streams, VOD events etc., and providing representative data to the user terminals 5, referred to hereafter as set top boxes (STBs). ln this description, we are concerned only with content data that represents VOD events.

The service provider operates a video server 7 which has access to a video store 9, a key store 11 and a profile store 13. The video store 9 stores the above-mentioned assets, in this case VOD data sets representing recent sporting events. The key server 11 stores decoding data in the form of decryption keys suitable for decoding a corresponding VOD data set. The profile store 13 maintains a user profile for each subscriber based on, amongst other information, the subscriber's viewing history. In addition, the video server 7 is connected to a selection module 15 and a throughput measurement module 17. The purpose of each will be described below.

At the user end, each user has a STB 5 which is connected to the IP network 19 and is arranged to receive video data from an incoming IP stream and to decode that data for output to a television system. The data may be encoded using any video encoding standard, e.g. MPEG2, MPEG4/AVC and the decoder 21 will be appropriate to decode such encoded data. Also provided with each STB 5 is a hard drive 23 providing a storage capability for received VOD data sets. The hard drive 23 may be internal (e.g. part of the STB's own personal video recorder (PVR) space) or an external drive. A key store 25 is also provided for storing decoding data corresponding to VOD data sets stored on the hard drive 23.

In use, the video server 7 will present an EPG to subscribers through which particular channels and VOD events can be selected. In the case of VOD events, certain events will have an associated playtime representing the earliest time that the subscriber, or rather their STB 5, will be able to decode that data set. As mentioned in the introduction, this restriction may be necessary to meet some agreed policy or agreement. Users will usually select a VOD event using their STB remote control. If the user selects an event prior to the playtime, a message is displayed on that user's TV indicating that the event is not yet available and the time when it can be viewed. Optionally, a reminder may be presented to the user at the playtime. If requested at or after the playtime, the event is decoded and displayed.

At the service provider system 3, the selection module 15 is employed to identify subscribers likely to request downloading of a particular VOD event at a future time. The video server 7 thereafter sends part of all of the video data set to the STB 5 of the or each selected user. This pre-emptive sending occurs in advance of the playtime, meaning that at least some of the video data set can be stored on the hard drive 23 of the relevant STB before the playtime, although decoding by the STB is not permitted until the playtime. In this way, where a significant number of subscribers request a particular event at or shortly after the advertised playtime, the network is not burdened with carrying all data sets. Rather, depending on how efficient the selection module is, many of the data sets will already have been transferred over the busier parts of network.

Subscribers are identified as being likely to request a particular VOD event on the basis of respective user profiles stored on the profile store 13. The user profile may include different types of user-related data. In this embodiment, the user profile includes details of the user's own VOD download history. As an example, reference is made to Figure 2 which shows the five previous selections for a given user. The first column of the profile states the event name as listed on the video store. The second column states the genre of the event. The third column states the day category, namely whether the user requested the event on a weekday or weekend, although other categories are possible, for example individual days. The fourth column states the time category, namely whether the user requested the event in the morning, afternoon or evening. Again, this can be broken down further into hourly periods.

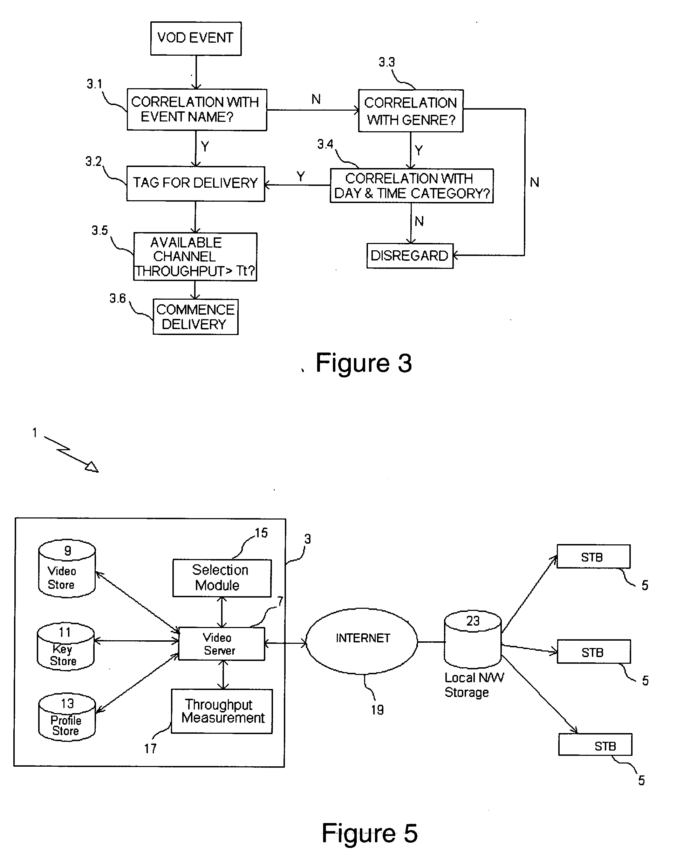

The selection module 15 provides a set of selection rules to identify those users likely to request a particular event. Referring to Figure 3, there is shown a flow chart indicating an example set of selection rules which compare attributes of a scheduled VOD event with those stored in user profiles. In a first step 3.1, the event name is compared with those stored in the user profile to determine whether there is a correlation. If at least one word (disregarding words having fewer than two letters and the word 'the') corresponds with a word in the profile, in a second step 3.2, the event is tagged for delivery to that user. If there is no correlation, in a third step 3.3, it is determined whether there is any correlation between genre attributes. If so, in a fourth step 3.4, it is determined whether there is any correlation with the day and time attributes. If so, then the event is tagged for delivery on the basis that the user has a history of requesting events in this genre and at that day and time. Otherwise, the event is disregarded and not tagged for delivery to the STB of the user concerned.

As a preferred feature of this embodiment, a tagged event is not delivered over the network to the user's STB until there is deemed appropriate capacity. The throughput measurement module is responsible for monitoring the available channel throughput 'Tt' between the video server and a node associated with the selected STB 5. Video data is only delivered when the throughput is above a predetermined level. This is reflected by the fifth and sixth steps 3.5, 3.6 indicated in Figure 3. In this way, the video server 7 does not unduly burden the intervening network 19 between itself and STBs 5 where pre-emptive delivery is required.

To illustrate operation of the selection module 15, we now apply the selection rules to two example VOD events for a user X having the profile shown in Figure 2.

A first scheduled VOD event has the following attributes.

| Event Name | Genre | Scheduled Playtime |
|---|---|---|
| West Ham v Liverpool | Sport/Football | Tuesday 30^{th} January 19.30-22.00 |

In the first step 3.1, there is a correlation between the event name attributes since a game between the two named football teams was previously requested. Accordingly, this event is tagged for delivery in the second step 3.2 and so will be forwarded to user X when the channel throughput Tt is above the predetermined level.

A second scheduled VOD event has the following attributes.

| Event Name | Genre | Scheduled Playtime |
|---|---|---|
| Reading v Wigan | Sport/Football | Tuesday 30^{th} January 20.00-22.15 |

In the first step 3.1, there is no correlation between the event name attributes. In the third step 3.3, there is a correlation between the genre attributes. In the fourth step 3.4, there is a correlation between the day and time categories since the user has a history of requesting events on weekday evenings. Accordingly, this event is also tagged for deliver and so will be forwarded to user X's STB 5 in the same way.

The selection rules of Figure 3 are illustrative and it will be appreciated that more complex rules can be applied, for example by requiring a correlation between- two or more previously requested events in a particular attribute category, or applying different weightings to particular attributes.

Alternatively, or additionally, the selection module 15 may be linked to a user's personal calendar to identify whether the user is scheduled to be away from home at an event's scheduled playtime and for a predetermined period afterwards, e.g. on vacation. If so, it is highly unlikely that a request for this event will be made and so the event is not tagged regardless correlation between attributes. Such a selection step may be useful where the STB 5 forms part of a converged home network where users maintain Outlook Express ^{™} type calendars on their home computer and where "busy" or "available" details are made available to the video server 7.

Data sets representing event content will be encrypted to ensure only authorised users are able to decode and display the content. ln order to decrypt a data set, the corresponding decryption key is required at the user's STB 5. Accordingly, having supplied one or more users with content data, the video server 7 must also provide delivery of its corresponding key from the key store 13.

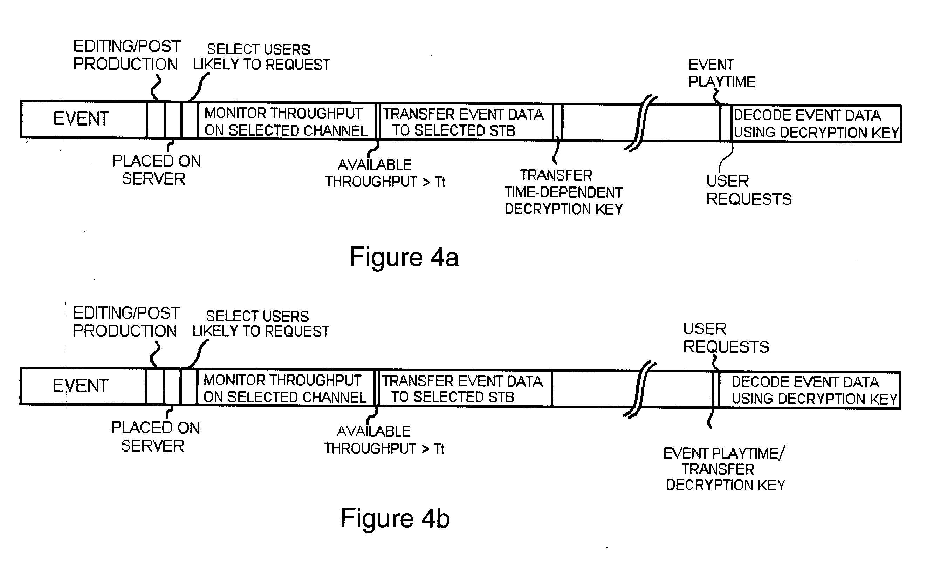

Referring to Figures 4a and 4b, first and second timelines are shown which are useful for understanding the typical order of actions taking place in the system shown in Figure 1. Referring first to Figure 4a, a sporting event takes place and is captured by the content supplier. Following editing/post-production, the data set is placed in the video store 9. Next, the selection module 15 performs its above-described selection process to identify users likely to request the event at or after its subsequent playtime. Having identified those users likely to request, the throughput measurement module 17 monitors throughput between itself and selected users' STBs 5. Only when available throughput is above the predetermined level is the content data transferred to user STBs 5. In this case, a time-dependent decryption key is then transferred and stored at the STB 5. The decryption key is time-dependent in that the key cannot itself be unlocked until the scheduled playtime, as determined by the internal clock of the user STB 5. At or after the scheduled playtime, a user request will result in the key being unlocked and the content data decrypted using said key.

Referring to Figure 4b, substantially the same sequence of events takes place, with the exception that the decryption key is not tim-dependent. Rather, the decryption key is transferred to the user STB 5 either at (or just before) the scheduled playtime, or when the user requests the content.

Where content data is sent to one or more STBs 5 having internal storage means 23, it is preferred that the content data be deleted from the storage means after the content is decoded or after a predetermined time interval from the playtime. Preferably, the STBs 5 are considered trusted devices such that users do not have unlimited access to decrypted content on their internal hard drives 23. Indeed, the STBs 5 may be prevented from storing a decrypted version of the content which is simply output for viewing following said decryption. Further, where a user does not request a VOD event within a predetermined period from its playtime, despite part or all of the content data being pre-emptively transferred to the user's STB 5, it is preferred that the content data be deleted. In this way, the user's personal storage space is not taken up with content data which the user has not requested.

ln the above-described embodiment, content data is pre-emptively transferred to a storage device 23 internal to the STB 5. ln a second embodiment, shown as a block diagram in Figure 5, content data is pre-emptively transferred to an external storage device 27 associated with a plurality of users having respective STBs 5. The plurality of STBs 7 represent a local sub-network of devices within a given geographical area. Content data is pre-emptively transferred from the video server 7 to this local network storage device 27 when one or more of the users in the sub-network is selected by the selection module 15. In this way, rather than transferring content data directly to individual STBs in advance of the playtime, content data is pre-emptively transferred to the local network storage device 27 where it is made available to the selected users and also to non-selected users who, in theory, might still request the event.

## Claims

1. A method of providing content for a video-on-demand (VOD) service to one or more users, the or each user having a client device for decoding the content for output to a display device, wherein the method comprises: pre-emptively sending part or all of a video data set, corresponding to a video programme, to a storage means associated with one or more selected client devices, said sending step being performed in advance of a predetermined playtime associated with the video programme, selection of the or each client device being performed by identifying, on the basis of a user profile associated with users of the service, one or more users likely to request a download of said video programme at a future time; and sending decoding data to the or each storage means, the decoding data being arranged to enable decoding of said part or all of the video data set no earlier than the predetermined playtime.

2. A method of providing content for a video-on-demand (VOD) service to one or more users, the or each user having a client device for decoding the video content for output to a display device, wherein the method comprises pre-emptively sending part or all of a video data set, corresponding to a video programme, to a selected one or more client devices in advance of a predetermined playtime associated with said video programme, selection of the or each client device being performed by identifying, on the basis of a user profile associated with each user of the service, one or more users likely to request a download of said video programme at a future time, and sending decoding data to the or each selected client device, the decoding data being arranged to enable decoding of said part or all of the video data set no earlier than the predetermined playtime.

3. A method according to claim 2, wherein the method is performed at a video server located remotely from the or each client device and further comprising monitoring data throughput between the server and a selected client device, and pre-emptively sending part or all of the video data set to that client device only when the monitored data throughput is at or above a predetermined level.

4. A method according to claim 2 or claim 3, wherein the user profile stores data representing a user's viewing history, selection being performed by identifying a correspondence between one or more attributes of the video programme and previously-viewed video programmes indicated in the user's viewing history.

5. A method according to claim 4, wherein the attributes include one- or more of programme title, programme genre and playtime.

6. A method according to any of claims 2 to 5, wherein the decoding data is sent to the or each selected client device in advance of the predetermined playtime.

7. A method according to any of claims 2 to 6, further comprising deleting the video data set from a client device in the event that no user request is received within a predetermined time period following the playtime.

8. A carrier medium for carrying processor code which when executed on a processor causes the processor to carry out the method of any one of the preceding claims.

9. Apparatus providing content for a video-on-demand (VOD) service to one or more users having respective client devices for decoding the content for output to a display device, wherein the apparatus comprises: transmission means for sending part or all of a video data set, corresponding to a video programme, to a storage means associated with one or more selected client devices, said sending step being performed in advance of a predetermined playtime associated with the video programme; selection means arranged to select the or each client device by identifying, on the basis of a user profile associated with users of the service, one or more users likely to request a download of said video programme at a future time; and means for sending decoding data to the or each storage means, the decoding data being arranged to enable decoding of said part or all of the video data set no earlier than the predetermined playtime.

10. Apparatus providing content for a video-on-demand (VOD) service to one or more users having respective client devices for decoding the video content for output to a display device, wherein the apparatus comprises: transmission means for sending part or all of a video data set, corresponding to a video programme, to a selected one or more client devices in advance of a predetermined playtime associated with said video programme; selection means arranged to select the or each client device by identifying, on the basis of a user profile associated with each user of the service, one or more users likely to request a download of said video programme; and means for sending decoding data to the or each selected client device, the decoding data enabling decoding of said part or all of the video data set substantially at, or subsequent to, the predetermined playtime.
